# EUROPÄISCHE PATENTSCHRIFT

(11) **EP 2 842 723 B1**
(45) Veröffentlichungstag und Bekanntmachung des Hinweises auf die Patenterteilung: **14.08.2019**
(21) Anmeldenummer: 14189664.7
(22) Anmeldetag: 23.03.2006
(51) Int. Cl.: B29C 65/06, B29C 65/14

(54) **Einrichtung zum Erwärmen von Verbindungsstellen**
Device for heating joints
Dispositif destiné à chauffer des emplacements de liaison

(43) Veröffentlichungstag der Anmeldung: 04.03.2015
(62) Teilanmeldung aus: 06723642.2
(73) Patentinhaber: HELLA GmbH & Co. KGaA, 59552 Lippstadt (DE)
(72) Erfinder: Sieben, Manuel, 34414 Warburg (DE); Schütte, Andreas, 33142 Büren (DE)
(74) Vertreter: Ostermann, Thomas

(56) Entgegenhaltungen:
- DE-A1- 10 203 090
- DE-U- 6 601 613

## Beschreibung

Die Erfindung betrifft eine Einrichtung zum Erwärmen von Verbindungsstellen von zu verschweißenden thermoplastischen Kunststoffteilen nach dem Oberbegriff des Patentanspruchs 1.

Aus der DE 694 07 871 T2 ist eine Einrichtung zum Erwärmen von Verbindungsstellen von Kunststoffteilen bekannt, die eine Strahlungsquelle zur Erzeugung einer elektromagnetischen Strahlung sowie Strahlungsführungsmittel zum Fokussieren der erzeugten elektromagnetischen Strahlung auf die Verbindungsstelle aufweist. Nachteilig an der bekannten Einrichtung ist die relativ aufwändige Fokussierung auf die Verbindungsstellen.

Aus der DE 66 01 613 U ist eine Einrichtung zum Erwärmen von Verbindungsstellen von zu verschweißenden thermoplastischen Kunststoffteilen bekannt. Diese Einrichtung umfasst zum einen eine Strahlungsquelle zur Erzeugung einer elektromagnetischen Strahlung und zum anderen Strahlungsführungsmittel zum Fokussieren der elektromagnetischen Strahlung auf die Verbindungsstelle. Die Strahlungsquelle ist als ein Rohrstrahler ausgebildet. Die Strahlungsführungsmittel umfassen eine Maske mit zu einem äußeren Strahlungsaustrittsspalt zusammenlaufenden Maskenflächen.

Aufgabe der vorliegenden Erfindung ist es daher, eine Einrichtung zum Erwärmen von Verbindungsstellen von zu verschweißenden thermoplastischen Kunststoffteilen derart weiterzubilden, dass die Fokussierbarkeit der Strahlungsenergie in Richtung der zu verbindenden Verbindungsstellen verbessert wird.

Zur Lösung dieser Aufgabe weist die Erfindung die Merkmale des Patentanspruchs 1 auf.

Der besondere Vorteil der erfindungsgemäßen Einrichtung besteht darin, dass eine verbesserte Linienstrahlführung über komplexe, dreidimensional verlaufende Verbindungsstellen erfolgen kann. Vorteilhaft können relativ hohe Strahlungsdichten erzeugt werden, die zu einer Verkürzung der Aufheizzeit der Verbindungsstellen führen.

Zusätzlich ermöglicht die Maske, dass dekorativ empfindliche Kunststoffteile thermisch geschützt werden. Die Maskenflächen weisen innenseitig Reflektorflächen auf, so dass die von dem Rohrstrahler abgegebene Strahlung innerhalb der Maske umher vagabundieren kann, bis sie durch den Maskenspalt (äußerer Strahlungsaustrittsspalt) die Maske in Richtung der Verbindungsstelle verlassen kann. Hierdurch können Toleranzen des Röhrenstrahlers (Leistungsinhomogenitäten des Strahlers) kompensiert werden.

Ein Ausführungsbeispiel der Erfindung wird nachfolgend anhand der Zeichnungen näher erläutert.

Es zeigen:
- Figur 1: einen teilweisen Querschnitt durch zwei zu verbindende Kunststoffteile mit jeweils einer Schmelzschicht,

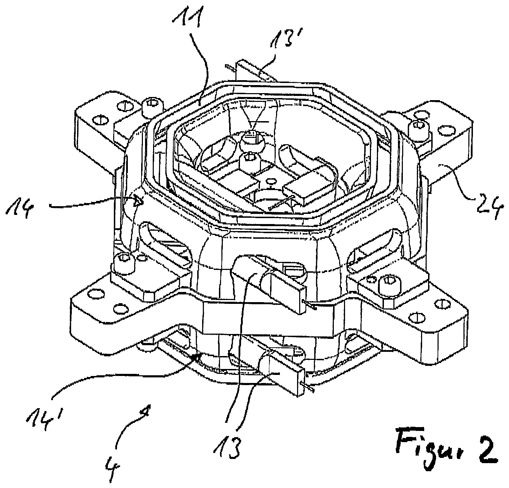

- Figur 2: eine perspektivische Darstellung einer Heizeinrichtung zur Vorerwärmung der zu verbindenden Kunststoffteile,

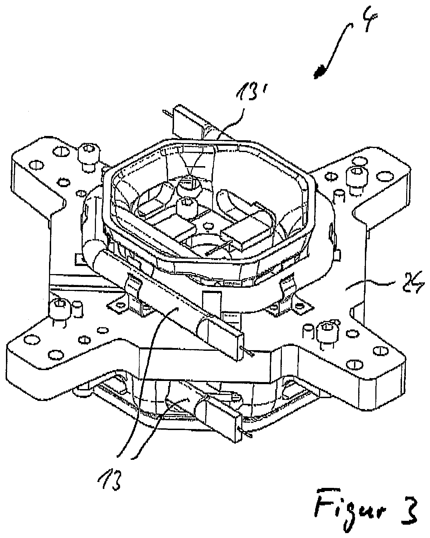

- Figur 3: eine perspektivische Darstellung der Heizeinrichtung gemäß Figur 2 mit teilweise freigelegten Strahlungsquellen,

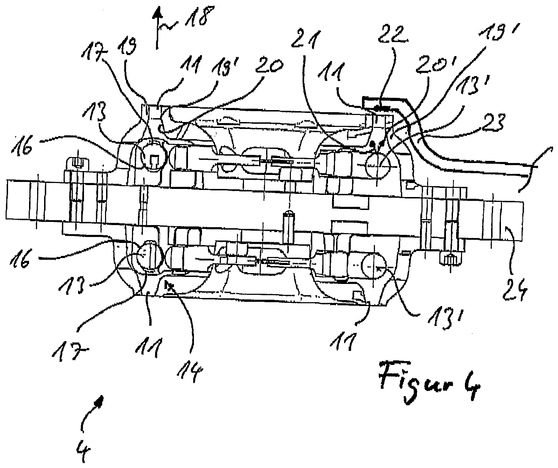

- Figur 4: eine Querschnitt durch die Heizeinrichtung im Bereich einer Maske,
- Figur 5: ein Steuerungsdiagramm für die Heizeinrichtung und
- Figur 6: eine Draufsicht auf eine Konfiguration von zwei schneckenförmig in der Heizeinrichtung angeordneten Rohrstrahlern.

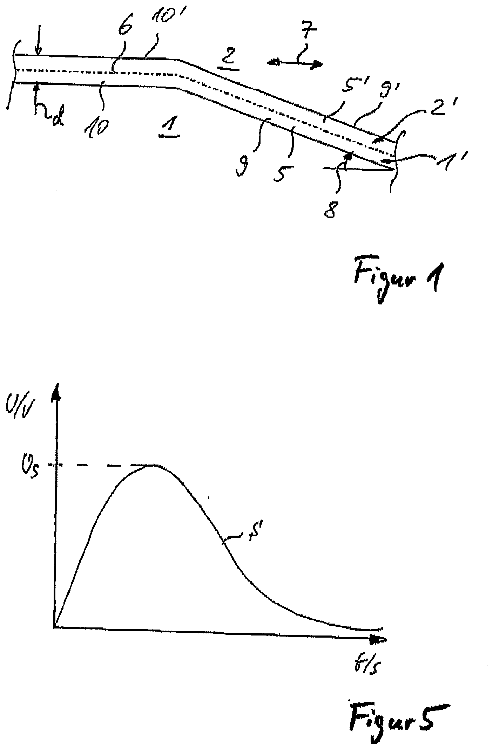

Das Verfahren zum Verschweißen von thermoplastischen Kunststoffteilen kann beispielsweise zum Verschweißen von Kunststoffteilen im Automobilbereich oder Haushaltsgerätebereich eingesetzt werden. Im vorliegenden Beispiel gemäß Figur 1 erfolgt eine Verbindung zwischen einem Gehäuseteil 1 (erstes Kunststoffteil) und einer Abschlussscheibe 2 (zweites Kunststoffteil) eines Scheinwerfers für Kraftfahrzeuge.

Gemäß einem ersten Verfahrensschritt werden das in einem Abstand zueinander angeordnete Gehäuseteil 1 und die Abschlussscheibe 2 an einer zueinander gekehrten Verbindungsstelle 1' bzw. 2' mittels einer in den weiteren Figuren dargestellten Heizeinrichtung 4 derart vorgewärmt, dass sich an der Verbindungsstelle 1', 2' eine Schmelzschicht 5 bzw. 5' von jeweils einer Dicke von 0,5 mm ergibt.

Nachfolgend werden das Gehäuseteil 1 und die Abschlussscheibe 2 derart aufeinander zu bewegt, bis sich die Schmelzschicht der Verbindungsstelle 1' bzw. die Schmelzschicht 5' der Verbindungsstelle 2' in einer Fügeebene 6 berühren. Die gesamte Schmelzschichtdicke d, die sich aus den einzelnen Schmelzschichten 5 und 5' zusammensetzt, beträgt nun 1 mm.

In einem weiteren Verfahrensschritt werden das Gehäuseteil 1 und die Abschlussscheibe 2 entlang einer Oszillationsrichtung 7 mit einer Amplitude von 0,45 mm und einer vorgegebenen Oszillationsfrequenz relativ zueinander bewegt (Vibrationsschweißen), wobei unter Erzeugung einer Scherleistung eine Durchmischung der in den Schmelzschichten 5, 5' enthaltenen Schmelze erfolgt. Dabei werden die Verbindungsstellen 1', 2' unter einem Fügedruck in Höhe von 0,5 bis 8,0 MPa aufeinander gedrückt. Bereits vor dem Aufeinanderdrücken sind die Verbindungsstellen 1', 2' vollständig plastifiziert, so dass die ansonsten vorhandene instationäre Schmelzebildung des Vibrationsschweißens nicht stattfindet. Mit Beginn des Vibrationsschweißens ist die Schmelze bereits gebildet.

In einem abschließenden Verfahrensschritt werden die Verbindungsstellen 1', 2' abgekühlt, wobei noch ein Fügedruck ohne Vibrationsbewegung bis zur vollständigen Erstarrung der Schmelze aufrechterhalten wird.

Wie aus Figur 1 zu ersehen ist, ist die Schwingweite (doppelte Amplitude) der Oszillationsbewegung kleiner als die gesamte Schmelzschichtdicke d, so dass Kunststoffteile mit gekrümmten Wandungen miteinander verschweißt werden können. Im vorliegenden Beispiel bildet die Oszillationsrichtung 7 zu den Wandungen des Gehäuseteils 1 bzw. der Abschlussscheibe 2 einen spitzen Anschwingwinkel 8, der beispielsweise 45° betragen kann.

Im vorliegenden Beispiel weisen das Gehäuseteil 1 und die Abschlussscheibe 2 parallel zueinander verlaufende Flächenabschnitte 9 bzw. 9' auf, die zu der Oszillationsrichtung 7 einen spitzen Winkel 8 bilden. Der weitere Flächenabschnitt 10, 10' des Gehäuseteils 1 bzw. der Abschlussscheibe 2 verläuft parallel zu der Oszillationsrichtung 7.

Die Vorerwärmung der Verbindungsstellen 1', 2' des Gehäuseteils 1 bzw. der Abschlussscheibe 2 erfolgt mittels der Heizeinrichtung 4, die den Verbindungsstellen 1', 2' über einen äußeren Strahlungsaustrittsspalt 11 die hierzu erforderliche Strahlungsleistung zukommen lässt. Die Kontur des äußeren Strahlungsaustrittsspalts 11 entspricht dabei dem Verlauf der Schweißnaht. Die Heizeinrichtung 4 wird derart gesteuert bzw. geregelt, dass die Verbindungsstellen 1', 2' des Gehäuseteils 1 bzw. der Abschlussscheibe 2 lediglich bis in einen Bereich der Schmelztemperatur entsprechend einer Steuerkurve S aufgeschmolzen werden. In dem Diagramm gemäß Figur 5 ist die elektrische Spannung U in Volt auf der Ordinate und die Zeit t in Sekunden auf der Abszisse aufgetragen. Es erfolgt ein relativ steiler Anstieg der Heizspannung bis zu einem Wert U_{S}, der zur Schmelztemperatur der Materialien korrespondiert. Nachfolgend wird die Heizleistung der Heizeinrichtung 4 derart entsprechend einer e-Funktion heruntergeregelt, wobei der Heizvorgang etwa nach 6 Sekunden abgeschlossen ist. Durch das Steuern bzw. Regeln der Heizleistung wird ein Überheizen der Verbindungsstellen 1', 2', was zu einer unerwünschten Ausgasung des Materials führen kann, verhindert.

Die Heizeinrichtung 4 weist ein Gehäuse 12 auf, in dem zu beiden Seiten eines mittleren Grundträgers 24 jeweils als Strahlungsquelle 2 zwei Infrarot-Rohrstrahler 13, 13' sowie als Strahlungsführungsmittel eine Maske 14 untergebracht sind. Die Rohrstrahler 13, 13' sind schneckenförmig angeordnet, wobei sie in einem Endbereich 15 derselben längsseitig entlang von Stoßkanten unmittelbar aneinander liegen.

Zur Bereitstellung der erforderlichen Energiedichte ist der Rohrstrahler 13, 13' als ein Glasrohrstrahler ausgebildet, wobei sich eine Glühwendel innerhalb des Glasröhrens in einer Schutzatmosphäre befindet.

Ein Tubus der Rohrstrahler 13, 13' ist umfangsseitig mit einer Reflektorfläche 16 aus Goldmaterial beschichtet, wobei ein innerer Strahlungsaustrittsspalt 17, der dem äußeren Strahlungsaustrittsspalt 11 zugewandt ist, freigelassen wird. Der innere Strahlungsaustrittsspalt 17 erstreckt sich in einem spitzen Winkel einer Breite in einem Bereich von 3 mm bis 8 mm, vorzugsweise in einer Breite von 4 mm bis 5 mm.

Die Maske 14 weist zwei sich in Hauptstrahlungsrichtung 18 verjüngende Maskenflächen 19, 19' auf, deren Enden den äußeren Strahlungsaustrittsspalt 11 begrenzen. Die Breite des äußeren Strahlungsaustrittsspalts 11 beträgt etwa 1, 5 mm. Der äußere Strahlungsaustrittsspalt 11 kann in einem Bereich von 1 mm bis 2 mm liegen.

Die Maskenflächen 19, 19' sind innenseitig mit einer Reflexionsfläche 20 versehen, so dass die aus dem Rohrstrahler 13, 13' austretende Strahlung 21 - wenn sie nicht direkt durch den äußeren Strahlungsaustrittspalt 11 nach außen tritt - an den Reflexionsflächen 20, 20' reflektieren und innerhalb der Maske so lange umher vagabundieren, bis sie durch den äußeren Strahlungsaustrittsspalt 11 in Richtung der Verbindungsstelle 1', 2' austreten. Auf diese Weise erfolgt eine Fokussierung der Strahlung 21 auf die Verbindungsstelle 1', 2'.

Die Reflexionsfläche 20, 20' der Maskenfläche 19, 19' kann als eine hochglanzpolierte Metallfläche ausgebildet sein. Durch Mehrfachreflexion an den Innenwänden der Maske 14 erfolgt eine Ausrichtung der Strahlung 21 in Richtung der Verbindungsstellen 1', 2'.

Hierdurch ergibt sich ein gleichmäßiger Energieeintrag über den gesamten Schweißnahtverlauf.

Dadurch, dass eine Maskenfläche 19' unmittelbar angrenzend zu einem in einem rechten Winkel zu der Verbindungsstelle 22 orientierten Flächenabschnitt 23 der Abschlussscheibe oder des Gehäuses 1 angeordnet ist, ist der dekorative Flächenabschnitt 23 während des Heizvorgangs thermisch geschützt angeordnet.

Der Rohrstrahler 13, 13' bildet einen Tubus, der in einer Rinne der Maske 14 vorzugsweise in einem konstanten Abstand zu den Verbindungsstellen 1', 2' angeordnet ist.

Im vorliegenden Ausführungsbeispiel ist eine Zwillingsmaske mit einer von einem mittleren Grundträger 24 auf eine Seite orientierten Maske 14 und einer gegenüberliegenden Maske 14' angeordnet, wobei die eine Maske 14 zum Vorheizen der Verbindungsstelle 1' des Gehäuseteils 1 und die andere Maske 14' zum Vorheizen der Verbindungsstelle 2' der Abschlussscheibe 2 dient. Die beiden Masken 14, 14' sind gleichartig ausgebildet, wobei die äußeren Strahlungsaustrittsspalte 11 höhenversetzt zueinander angeordnet sind.

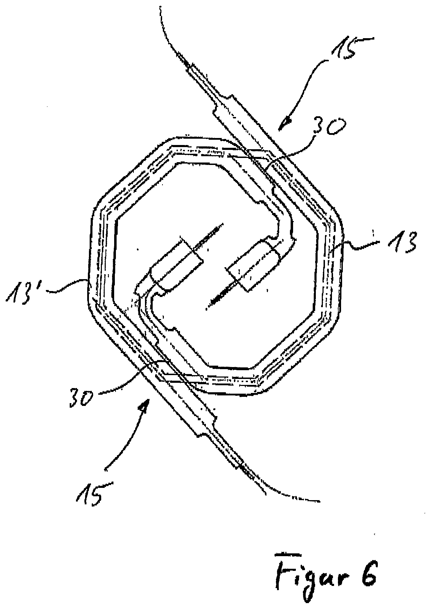

Die Rohrstrahler 13, 13' sind jeweils U-förmig ausgebildet, wobei sie jeweils in einem Endbereich 15 derselben unter Bildung von Stoßkanten 30 unmittelbar aneinander liegen, wie in Figur 6 dargestellt. Es ergibt sich somit eine achteckige Konfiguration der Rohrstrahler 13, 13' die die Nachbildung eines achteckigen Schweißsteges (Schweißnaht) ermöglichen. Somit korrespondieren der innere Strahlungsaustrittsspalt 17 sowie der äußere Strahlungsaustrittsspalt 11 zu dem Verlauf der Rohrstrahler 13, 13' und geben damit den Verlauf der Schweißnaht vor. Vorteilhaft ergibt sich hierdurch ein geschlossener Fügeverlauf.

Durch die Ausbildung der Maske 14, 14' mit den im Bereich der Rohrstrahler 13, 13' bauchig angeordneten Reflektorflächen 16, sich die in Abstrahlrichtung verjüngend erstrecken, erfolgt eine Kompensation insbesondere des in dem Endbereich 15 vorliegenden Energieüberschusses in Folge der zwei nebeneinander angeordneten Abschnitte der Rohrstrahler 13, 13'. Die Reflexionsflächen 20, 20' und die Mantelflächen 19, 19' der Maske 14, 14' sind im Abschnitt der Endbereiche 15 derart ausgebildet, dass die durch den äußeren Strahlungsaustrittsspalt 17 abgegebene Strahlungsenergie einen vorgegebenen Schwellwert nicht übersteigt.

## Patentansprüche

1. Einrichtung zum Erwärmen von Verbindungsstellen (1', 2') von zu verschweißenden thermoplastischen Kunststoffteilen (1, 2) mit einer Strahlungsquelle zur Erzeugung einer elektromagnetischen Strahlung (21) und mit Strahlungsführungsmitteln zum Fokussieren der elektromagnetischen Strahlung (21) auf die Verbindungsstelle (1', 2'), wobei die Strahlungsquelle als ein Rohrstrahler (13, 13') ausgebildet ist mit einem die Längserstreckung der Verbindungsstellen (1', 2') vorgegebenen Tubus, in dem sich eine Glühwendel erstreckt, wobei die Strahlungsführungsmittel eine Maske (14, 14') umfassen, die über sich in Hauptabstrahlrichtung (18) verjüngende und zu einem äußeren Strahlungsaustrittsspalt (11) zusammenlaufende Maskenflächen (19, 19') verfügt, wobei die Strahlungsführungsmittel eine Reflektorfläche (16) umfassen, die sich umfangsseitig des Tubus unter Freilassung eines inneren Strahlungsaustrittsspaltes (17) erstreckt, **dadurch gekennzeichnet, dass** die Maskenflächen (19, 19') innenseitig eine Reflexionsfläche (20, 20') aufweisen und dass sich der innere Strahlungsaustrittsspalt (17) des Tubus sich in einem spitzen Winkel einer Breite in einem Bereich von 3 mm bis 8 mm erstreckt.

2. Einrichtung nach Anspruch 1, **dadurch gekennzeichnet, dass** der innere Strahlungsaustrittsspalt (17) eine Breite in einem Bereich von 4 mm bis 5 mm aufweist.

3. Einrichtung nach Anspruch 1 oder 2, **dadurch gekennzeichnet, dass** der äußere Strahlungsaustrittsspalt (11) eine Breite in einem Bereich von 1 mm bis 2 mm, vorzugsweise eine Breite von 1,5 mm, aufweist.

4. Einrichtung nach einem der Ansprüche 1 bis 3, **dadurch gekennzeichnet, dass** mehrere Rohrstrahler (13, 13') vorgesehen sind, die zur Bildung der Schweißkonturkonfiguration an ihren Endbereichen (15) längsseitig unmittelbar nebeneinander liegen, und wobei die Reflexionsflächen (20, 20') und/oder die Maskenfläche (19, 19') der Maske (14) derart ausgebildet sind, dass die über den äußeren Strahlungsaustrittsspalt (11) abgegebenen Strahlungsenergie einen vorgegebenen Schwellwert nicht übersteigt.

## Claims

1. A device for heating joints (1', 2') of thermoplastic plastic parts (1, 2) to be welded, comprising a radiation source for generating electromagnetic radiation (21) and radiation guiding means for focusing the electromagnetic radiation (21) onto the joint (1', 2'),
wherein the radiation source is designed as a tube radiator (13, 13') with a tube which predetermines the longitudinal extent of the joints (1', 2') and in which a filament extends,
wherein the radiation guiding means comprise a mask (14, 14') which has mask surfaces (19, 19') which taper in the main radiation direction (18) and converge to form an outer radiation exit gap (11),
wherein the radiation guiding means comprise a reflector surface (16) extending circumferentially around the tube while leaving an inner radiation exit gap (17) free,
**characterized in that** the mask surfaces (19, 19') have a reflection surface (20, 20') on the inside and **in that** the inner radiation exit gap (17) of the tube extends at an acute angle of a width ranging from 3 mm to 8 mm.

2. The device according to Claim 1,
**characterized in that** the inner radiation exit gap (17) has a width ranging from 4 mm to 5 mm.

3. The device according to Claim 1 or 2,
**characterized in that** the outer radiation exit gap (11) has a width ranging from 1 mm to 2 mm, preferably a width of 1.5 mm.

4. The device according to any one of Claims 1 to 3,
**characterized in that** a plurality of tube radiators (13, 13') are provided which, in order to form the welding contour configuration, lie directly adjacent to one another with their longitudinal sides at their end regions (15), and
wherein the reflection surfaces (20, 20') and/or the mask surface (19, 19') of the mask (14) are designed in such a way that the radiant energy emitted through the outer radiation exit gap (11) does not exceed a predetermined threshold value.

## Revendications

1. Dispositif destiné à chauffer des emplacements de liaison (1', 2') de pièces en matière synthétique, thermoplastique (1, 2) devant être soudées, avec une source de rayonnement, destinée à générer un rayonnement électromagnétique (21), et avec des moyens de guidage de rayonnement pour focaliser le rayonnement électromagnétique (21) sur l'emplacement de liaison (1', 2'), sachant que la source de rayonnement est formée par un dispositif de rayonnement tubulaire (13, 13') avec un tube prédéterminant l'étendue longitudinale des emplacements de liaison (1', 2'), dans lequel s'étend un filament incandescent, spiralé, sachant que les moyens de guidage de rayonnement comprennent un masque (14, 14'), qui dispose de surfaces de masque (19, 19'), qui s'amincissent dans la principale direction de rayonnement (18) et convergent sur une fente de sortie de rayonnement extérieure (11), sachant que les moyens de guidage de rayonnement comprennent un surface de réflecteur (16), qui s'étend sur le pourtour du tube tout en laissant libre une fente de sortie de rayonnement intérieure (17),
**caractérisé en ce que**
les surfaces de masque (19, 19') présentent, sur la face intérieure, une surface de réflexion (20, 20') et que la fente de sortie de rayonnement intérieure (17) du tube s'étend en angle aigu sur une largeur située dans une plage allant de 3 mm á 8 mm.

2. Dispositif selon la revendication 1, **caractérisé en ce que** la fente de sortie de rayonnement intérieure (17) présente une largeur située dans une plage allant de 4 mm à 5 mm.

3. Dispositif selon revendication 1 ou 2, **caractérisé en ce que** la fente de sortie de rayonnement extérieure (11) présente une largeur située dans une plage allant de 1 mm à 2 mm, de préférence une largeur de 1,5 mm.

4. Dispositif selon l'une des revendications 1 à 3, **caractérisé en ce que** plusieurs dispositifs de rayonnement tubulaires (13, 13') sont prévus, lesquels sont posés, longitudinalement, directement les uns à côté des autres, à leurs extrémités (15), pour former la configuration du contour de soudage, et sachant que les surfaces de réflexion (20, 20') et / ou les surfaces de masque (19, 19') du masque (14) sont formées de manière à ce que l'énergie de rayonnement délivrée par l'intermédiaire de la fente de sortie de rayonnement extérieure (11) ne surpasse pas une valeur limite prédéterminée.
